# EUROPÄISCHE PATENTANMELDUNG

(11) **EP 2 218 980 A2**
(43) Veröffentlichungstag der Anmeldung: **18.08.2010**
(21) Anmeldenummer: 10090005.9
(22) Anmeldetag: 11.02.2010
(51) Int. Cl.: F24J 2/38

(54) **Unterstützungsvorrichtung, Steuereinrichtung und Verfahren zum Unterstützen einer Energiegewinnung aus Sonnenlicht**

(30) Priorität: 12.02.2009 DE 102009008548
(71) Anmelder: Hendrik, Meyer, 12049 Berlin (DE)
(72) Erfinder: Hendrik, Meyer, 12049 Berlin (DE)
(74) Vertreter: Patentanwälte Bressel und Partner

(57) **Zusammenfassung**

Die Erfindung betrifft eine Unterstützungsvorrichtung (24, 24a, 24b), ein Verfahren zum Unterstützen einer Energiegewinnung aus Sonnenlicht mit Hilfe von Solarpaneelen sowie eine Steuereinrichtung für eine solche Unterstützungsvorrichtung. Eine solche Unterstützungsvorrichtung umfasst einen Reflektor (14), der um eine Schwenkachse (16) schwenkbar gelagert ist, einen mit dem Reflektor (14) gekoppelten Aktor (19, 19a, 19b) zum Verschwenken des Reflektors (14) um die Schwenkachse (16) und eine Steuereinrichtung (20, 20a, 20b), die mit dem Aktor (19, 19a, 19b) gekoppelt ist und zum sonnenstandabhängigen Antreiben des Aktors (19, 19a, 19b) ausgebildet ist, wobei der Reflektor (14) benachbart zu einem im direkten Sonnenlicht (11) angeordneten Solarpaneel (3, 3a, 3b) so anordenbar ist, dass bei geeigneter Verschwenkungsstellung direkt auf den Reflektor (14) auftreffendes Sonnenlicht (11) auf eine aktive Fläche des Solarpaneels (3, 3a, 3b) reflektierbar ist, wobei die Steuereinrichtung (20, 20a, 20b) ausgebildet ist, abhängig vom Sonnenstand den Aktor (19, 19a, 19b) so zu steuern, dass entweder
das von dem Reflektor (14) auf die aktive Fläche des Solarpaneels (3, 3a, 3b) reflektierte Licht diese aktive Fläche des Solarpaneels (3, 3a, 3b) vollflächig überdeckt (Unterstützungsmodus)
oder andernfalls gar keine Sonnenlichtreflexion von dem Reflektor (14) auf die aktive Fläche des Solarpaneels (3, 3a, 3b) erfolgt (Passivmodus).

## Beschreibung

Die Erfindung betrifft eine Unterstützungsvorrichtung, eine Steuereinheit für eine Unterstützungsvorrichtung sowie ein Verfahren zum Unterstützen einer Energiegewinnung aus Sonnenlicht mit Hilfe von Solarpaneelen. Insbesondere betrifft die Vorrichtung die Unterstützung der Energiegewinnung aus Sonnenlicht mit Hilfe von aus Photovoltaikmodulen bestehenden Solarpaneelen.

Aus dem Stand der Technik ist es bekannt, die durch Sonnenlicht bereitgestellte Energie zu nutzen. Dieser Prozess wird auch als Energiegewinnung bezeichnet. Hierbei wird die durch das Sonnenlicht übertragene Strahlungsenergie in einem Solarpaneel, welches dem Sonnenlicht ausgesetzt ist, in eine andere Energieform, beispielsweise Wärmeenergie oder elektrische Energie, umgewandelt. Um eine Effizienzverbesserung bei der Energieumwandlung zu erreichen, ist es im Stand der Technik bekannt, so genannte Konzentratortechniken zu nutzen. Als Konzentratortechniken werden hier solche Techniken verstanden, die eine Intensität einer Sonnenlichteinstrahlung auf das Paneel über die natürliche Sonnenlichteinstrahlung pro Flächeneinheit des Paneels steigern, die auf das Paneel bei direkter Bestrahlung mit dem Sonnenlicht auftrifft. Diese Techniken verwenden spiegelnde Flächen, um zusätzliche Strahlungsleistung auf eine aktive Fläche des Solarpaneels zu lenken.

Aus dem Stand der Technik ist es darüber hinaus bekannt, zur Effizienzsteigerung eine Ausrichtung des Solarpaneels relativ zum Sonnenstand nachzuführen. Dieses Nachführen nach dem Sonnenstand, d.h. nach einer Einstrahlungsrichtung des Sonnenlichts auf die Erdoberfläche, wird häufig auch als Tracking bezeichnet. Ebenso wie das Nachführen der Solarpaneele ist es bekannt, bei den Konzentratortechniken verwendete Reflektoren dem Sonnenstand nachzuführen. Alle bekannten Techniken sind jedoch sehr materialaufwendig und technologisch meist sehr komplex, so dass ein erhöhter Material- und Planungsaufwand notwendig sind und daher eine wirtschaftliche Rentabilität der Investition in solche Techniken gefährdet ist. Aufgrund dieser Tatsache wurden Konzentratortechniken bisher nur in Großanlagen, nicht jedoch beispielsweise in Photovoltaikanlagen von Einfamilienhäusern oder Ähnlichem genutzt.

Aus dem Stand der Technik ist es ebenfalls bekannt, dass es bei Solarpaneelen, die Photovoltaikmodule in Form von Solarzellen umfassen, bei einer Teilverschattung einzelner Zellen zu Schädigungen kommen kann. Ebenso ist es bekannt, dass bei teilverschatteten Zellen oder Solarmodulen innerhalb der Solarzellen Ausgleichsströme fließen, die als Widerstand wirken und zu einer Leistungsminderung bei der Energieumwandlung führen.

Aus der EP 1 959 534 A1 sind eine Steuerung und ein Antrieb eines kippbaren Solarreflektors zur Leistungssteigerung von flächigen Sonnenkollektoren bekannt. Beschrieben ist ein L-förmiger schwenkbarer Träger mit einer reflektierenden Fläche, die oberhalb eines Sonnenkollektors so geführt wird, dass zusätzliche Strahlung auf den Kollektor reflektiert wird. Damit wird die Leistung des Sonnenkollektors gesteigert und gesteuert. Die Steuerung der Einrichtung basiert auf astronomischen Daten. Der L-förmige Träger ist um den kurzen Schenkel drehbar gelagert und der Sonnenreflektor schwenkbar relativ zu dem langen Schenkel des L-förmigen Trägers.

Aus der DE 10 2006 043 635 A1 ist eine Reflektorvorrichtung für eine Solareinrichtung mit einem Reflektortuch bekannt, das mittels einer Gelenk- und/oder Teleskoparm-Mechanik von einer Schutzposition in eine Arbeitsposition transportierbar ist. Das Reflexionstuch weist diffuse Reflexionseigenschaften auf. In der Schutzposition ist das Reflektortuch in einem geschlossenen Kasten eingerollt.

Aus der DE 100 32 227 A1 ist eine Anordnung zum Schutz und zur Effizienzsteigerung von flächigen Solarkollektoren bekannt. Die Anordnung umfasst ein Rollo, das an einer Unterseite verspiegelt ist. Ein Rahmen des Rollos ist an einer Oberseite des Kollektors drehbar gelagert. Zur Leistungsbegrenzung und zum Schutz kann das Rollo parallel zur Kollektorebene ausgefahren werden. Zur Leistungssteigerung kann der Rahmen aufgestellt werden. Die Steuerung erfolgt per Hand oder über ein Steuerprogramm. Ein Anstellwinkel wird durch die Lage des reflektierten Lichts der ausgefahrenen Rollokante an der Unterkante des Kollektors mit Hilfe von zwei Lichtmesszellen, von denen eine heller sein muss, automatisch nachgestellt.

Der Erfindung liegt somit das technische Problem zugrunde, eine Unterstützungsvorrichtung, eine Steuereinrichtung für eine solche Unterstützungsvorrichtung sowie ein Verfahren zur Unterstützung der Energiegewinnung aus Sonnenlicht mit Hilfe von Solarpaneelen zu schaffen, die einfach ausgebildet sind und eine Effizienzsteigerung der Energiegewinnung bzw. Energieumwandlung bewirken.

Das technische Problem wird erfindungsgemäß durch eine Unterstützungsvorrichtung mit den Merkmalen des Patentanspruchs 1, ein Verfahren mit den Merkmalen des Patentanspruchs 7 sowie eine Steuereinrichtung mit den Merkmalen des Patentanspruchs 12 erfindungsgemäß gelöst. Vorteilhafte Ausgestaltungen der Erfindung ergeben sich aus den Unteransprüchen.

Vorgeschlagen wird eine Unterstützungsvorrichtung für zur Energiegewinnung aus Sonnenlicht ausgebildete Solarpaneele, umfassend: einen Reflektor, der um eine Schwenkachse schwenkbar gelagert ist, einen mit dem Reflektor gekoppelten Aktor zum Verschwenken des Reflektors um die Schwenkachse und eine Steuereinrichtung, die mit dem Aktor gekoppelt ist und zum sonnenstandsabhängigen Antreiben des Aktors ausgebildet ist, wobei der Reflektor benachbart zu einem im direkten Sonnenlicht angeordneten Solarpaneel so anordenbar ist, dass bei geeigneter Verschwenkungsstellung direkt auf den Reflektor auftreffendes Sonnenlicht auf eine aktive Fläche des Solarpaneels reflektierbar ist. Hierbei ist vorgesehen, dass die Steuereinrichtung ausgebildet ist, abhängig vom Sonnenstand den Aktor so zu steuern, dass entweder, sofern der Sonnenstand dieses ermöglicht, das von dem Reflektor auf die aktive Fläche des Solarpaneels reflektierte Licht diese aktive Fläche des Solarpaneels vollflächig überdeckt, dieser Betriebsmodus wird Unterstützungsmodus genannt, oder andernfalls, sofern eine vollflächige Ausleuchtung der aktiven Fläche des Solarpaneels nicht möglich ist, gar keine Sonnenlichtreflektion von dem Reflektor auf die aktive Fläche des Solarpaneels erfolgt, dieser Betriebsmodus wird Passivmodus genannt. Als Solarpaneel wird hier jede bauliche Anordnung angesehen, die Elemente umfasst, welche eine Energieumwandlung von Strahlungsenergie des Sonnenlichts in eine andere Energieform ermöglichen. Die aktive Fläche des Solarpaneels ist hierbei jene Fläche, die für die Energieumwandlung beleuchtet werden soll. Ein Solarpaneel kann hierbei mehrere Elemente, beispielsweise mehrere Solarmodule, die beispielsweise als Photovoltaikmodule ausgebildet sind, umfassen. Das Paneel wird in der Regel eine mechanische Struktur aufweisen, die die einzelnen Elemente miteinander verbindet. Ein Solarpaneel im Sinne des hier verwendeten Begriffs kann jedoch auch eine Anordnung sein, die aus mehreren eng benachbart zueinander angeordneten Elementen bzw. Modulen zur Energiegewinnung besteht. So kann ein Solarpaneel beispielsweise mehrere in einer Reihe oder mehreren Reihen nebeneinander angeordnete Photovoltaikmodule umfassen, welche selbst wiederum eine Solarzelle oder mehrere miteinander gekoppelte Solarzellen umfassen können. Voneinander beabstandete Energieumwandlungsmodule, beispielsweise Photovoltaikmodule oder Sonnenkollektoren, insbesondere wenn diese bezogen auf eine Haupteinstrahlungsrichtung der Sonnenstrahlung beabstandet hintereinander angeordnet sind, werden nicht als ein Solarpaneel, sondern als mehrere Solarpaneele aufgefasst.

Bei dem Reflektor handelt es sich um eine bauliche Einheit, die mindestens eine reflektierende Fläche umfasst, die geeignet ist, Sonnenlicht in einem Wellenlängenbereich zu reflektieren, welches für eine Energieumwandlung in dem entsprechenden Solarpaneel genutzt wird.

Ebenfalls wird ein Verfahren zum Unterstützen einer Energiegewinnung aus Sonnenlicht mit Hilfe von Solarpaneelen vorgeschlagen, welches die Schritte umfasst: Bereitstellen eines um eine Schwenkachse schwenkbaren Reflektors benachbart zu einem Sonnenpaneel und Verschwenken des um die Schwenkachse schwenkbaren Reflektors abhängig von einem Sonnenstand in eine Stellung, bei der direkt auf den Reflektor auftreffendes Sonnenlicht auf eine aktive Fläche eines direkt dem Sonnenlicht ausgesetzten Solarpaneels reflektiert wird. Hierbei ist vorgesehen, dass der Reflektor abhängig von dem Sonnenstand so verschwenkt wird, dass entweder in einem Unterstützungsmodus, sofern der Sonnenstand dieses ermöglicht, das von dem Reflektor auf die aktive Fläche des Solarpaneels reflektierte Licht diese aktive Fläche des Solarpaneels vollflächig überdeckt oder andernfalls, sofern eine vollflächige Ausleuchtung der aktiven Fläche des Solarpaneels nicht möglich ist, in einem Passivmodus gar kein Sonnenlicht von dem Reflektor auf die aktive Fläche des Solarpaneels reflektiert wird.

Ferner wird eine Steuereinrichtung für eine Unterstützungsvorrichtung einer Anlage zur Energiegewinnung aus Sonnenlicht mit Hilfe von Solarpaneelen geschaffen, bei der die Unterstützungsvorrichtung einen Reflektor, der um eine Schwenkachse schwenkbar gelagert ist, einen mit dem Reflektor gekoppelten Aktor zum Verschwenken des Reflektors um die Schwenkachse umfasst und der Reflektor benachbart zu einem im direkten Sonnenlicht angeordneten Solarpaneel so angeordnet ist, dass bei geeigneter Verschwenkungsstellung direkt auf den Reflektor auftreffendes Sonnenlicht auf eine aktive Fläche des Solarpaneels reflektierbar ist, wobei die Steuereinrichtung eine Berechnungseinheit umfasst, die Steuersignale für den Aktor erzeugt, um sonnenstandsabhängig die Verschwenkung des Reflektors zu steuern, wobei vorgesehen ist, dass die Berechnungseinheit ausgebildet ist, abhängig vom Sonnenstand die Steuersignale für den Aktor so zu steuern, dass der Aktor den Reflektor so verschwenkt, dass entweder in einem Unterstützungsmodus, sofern der Sonnenstand dieses ermöglicht, das von dem Reflektor auf die aktive Fläche des Solarpaneels reflektierte Licht diese aktive Fläche des Solarpaneels vollflächig überdeckt oder andernfalls, sofern eine vollflächige Ausleuchtung der aktiven Fläche des Solarpaneels nicht möglich ist, in einem Passivmodus gar keine Sonnenlichtreflexion von dem Reflektor auf die aktive Fläche des Solarpaneels erfolgt. Diese vorgeschlagenen Gegenstände weisen den Vorteil auf, dass jeweils die aktive Fläche des Solarpaneels, beispielsweise eines oder mehrerer Photovoltaikmodule, einer gleichmäßigen Sonnenlichtintensität ausgesetzt ist. Die vorgeschlagene Unterstützungsvorrichtung nutzt einen um eine Schwenkachse verschwenkbaren Reflektor, so dass eine mechanisch einfache Ausgestaltung der Unterstützungsvorrichtung möglich ist. Über die spezielle Nachführung des Reflektors angepasst an den Sonnenstand wird erreicht, dass eine Lichtkonzentration auf der aktiven Fläche erreicht wird. Ist eine vollflächige Ausleuchtung der aktiven Fläche des Solarpaneels durch das an dem Reflektor reflektierte Licht nicht möglich, so wird dieser in eine Stellung verschwenkt, die dazu führt, dass von dem Reflektor gar kein Sonnenlicht auf die aktive Fläche des Solarpaneels reflektiert wird. Somit wird die aktive Fläche im Unterstützungsmodus durch direkten Sonnenlichteinfall und zusätzlich vollflächig durch reflektiertes Sonnenlicht bestrahlt. Im Passivmodus findet hingegen nur eine Bestrahlung durch das direkt einfallende Sonnenlicht statt. Hierdurch wird gewährleistet, dass alle Bereiche der aktiven Fläche des Solarpaneels der gleichen Lichtintensität ausgesetzt sind. Ein Auftreten von Ausgleichsströmen wird hierdurch vermieden. Somit wird eine optimale Effizienzsteigerung erreicht, ohne nachteilige Effekte bei ungünstigen Sonnenstandsbedingungen in Kauf nehmen zu müssen, die eventuell zu Schädigungen einzelner Elemente des Solarpaneels führen können.

Der Sonnenstand bzw. eine Einstrahlungsrichtung des Sonnenlichts können in einem Horizontalkoordinatensystem durch einen Höhenwinkel γ und einen Azimutalwinkel ϕ angeben werden, wobei der Azimutalwinkel ϕ in der Regel die Himmelsrichtung bezogen auf die Himmelsrichtung Süden (für die Nordhalbkugel) angibt. Der Höhenwinkel gibt eine Höhe über dem Horizont an. Sowohl der Höhenwinkel γ als auch der Azimutalwinkel ϕ sind zum einen von der geografischen Lage, d.h. der geografischen Länge und der geografischen Breite, des Aufstellortes des Solarpaneels abhängig. Darüber hinaus sind der Höhenwinkel und der Azimutalwinkel zeitabhängig, sowohl jahres- als auch tageszeitabhängig. Während sich der Azimutalwinkel im Tagesverlauf monoton ändert (vom Sonnenaufgang im Osten bis zum Sonnenuntergang im Westen) ändert sich der Höhenwinkel vom Wert 0° beim Sonnenaufgang zum einem Maximalwert beim Süddurchgang des Azimutalwinkels und fällt dann wieder bis zum Sonnenuntergang auf 0° ab. Für einen geografischen Ort ist der im Tagesverlauf erreichte maximale Höhenwinkel γ jahreszeitabhängig. Die gemachten Angaben beziehen sich jeweils auf die Nordhalbkugel. Für die Südhalbkugel sind die Himmelsrichtungen entsprechend anzupassen.

Um in einer möglichst großen Zeitspanne des Tagesverlaufs die Unterstützungsvorrichtung im Unterstützungsmodus betreiben zu können, ist bei einer bevorzugten Ausführungsform der Erfindung vorgesehen, dass eine reflektierende Fläche des Reflektors parallel zur Schwenkachse eine größere Erstreckung als die aktive Fläche des Solarpaneels parallel zur Schwenkachse aufweist. Im Idealfall ist das Solarpaneel nach Süden ausgerichtet. Dies bedeutet, dass eine Oberflächennormale des Paneels, sofern dieses nicht horizontal angeordnet ist, bei einer Projektion auf die Äquatorialebene nach Süden weist. In jedem Fall ist jedoch der Reflektor der Unterstützungsvorrichtung nördlich des Solarpaneels angeordnet. Bei einem optimal nach Süden ausgerichteten Solarpaneel verläuft die Schwenkachse in Ost-West-Richtung. Ist das Solarpaneel in einer anderen Himmelsrichtung als Süden ausgerichtet, so ist die Schwenkachse vorzugsweise senkrecht zu dieser Ausrichtung ausgerichtet. Ist das Solarpaneel vollständig horizontal ausgebildet, so dass die Oberflächennormale der aktiven Fläche des Solarpaneels in der Äquatorialebene einen Punkt bildet, so wird das Solarpaneel, sofern die aktive Fläche rechteckig ist, vorzugsweise so ausgebildet, dass zwei Seitenkanten der aktiven Fläche in Nord-Süd-Richtung verlaufen und die anderen beiden Seitenkanten bzw. Ränder der aktiven Fläche in Ost-West-Richtung verlaufen. Die Schwenkachse des Reflektors ist dann vorzugsweise ebenfalls in Ost-West-Richtung ausgerichtet. Die in Ost-West-Richtung verlaufenden Ränder der aktiven Fläche des Solarpaneels sind vorzugsweise länger als die in Nord-Süd-Richtung ausgerichteten Ränder. Weist die aktive Fläche des Reflektors entlang der Schwenkachse eine größere Ausdehnung als die aktive Fläche des Solarpaneels, so kann für einen längeren Zeitpunkt die Beleuchtungsbedingung für den Unterstützungsmodus aufrechterhalten werden. Insbesondere wenn mehrere unterschiedliche voneinander beabstandete Solarpaneele verwendet werden, die insbesondere in Nordsüdrichtung voneinander beabstandet sind, ist es vorteilhaft, wenn der Reflektor senkrecht zur Schwenkachse eine Ausdehnung aufweist, die einer Ausdehnung des Solarpaneels bzw. dessen aktiver Fläche entspricht.

Bei einer bevorzugten Ausführungsform der Erfindung ist vorgesehen, dass die Steuereinheit bzw. eine Berechnungseinheit der Steuereinheit ausgebildet ist, Steuersignale für den Aktor zu erzeugen, so dass über den Aktor der Reflektor im Unterstützungsmodus so verschwenkt wird, dass die durch das reflektierte Licht ausgeleuchtete Fläche in der Ebene des Solarpaneels minimiert ist, unter der Randbedingung, dass die aktive Fläche des Solarpaneels vollflächig ausgeleuchtet ist. Wird ein Verschwenkungswinkel, der zwischen der aktiven Fläche des Solarpaneels und der aktiven Fläche des Reflektors gemessen wird, bei feststehendem Sonnenstand bzw. Einstrahlwinkel des Sonnenlichts vergrößert, so bewirkt dies eine Vergrößerung der Fläche, die durch das reflektierte Sonnenlicht ausgeleuchtet wird. Somit wird die auf den Reflektor direkt auftreffende Energie, die in dem Sonnenlicht enthalten ist, auf eine größere Fläche verteilt. Dies ist im Hinblick auf eine Konzentration des Sonnenlichts somit nachteilig, so dass eine Minimierung der durch die Reflektion ausgeleuchteten Fläche unter der Maßgabe, dass die aktive Fläche des Solarpaneels vollständig ausgeleuchtet wird, anzustreben ist. Insbesondere wenn das Solarpaneel rechteckig ausgestaltet ist, wird es bevorzugt, die reflektierende Fläche des Reflektors ebenfalls rechteckig oder noch bevorzugter trapezförmig auszugestalten. Hierbei weist die reflektierende Fläche des Reflektors bei einer bevorzugten Ausführungsform zwei zueinander parallel ausgerichtete Ränder auf, die parallel zur Schwenkachse orientiert sind. Insbesondere bei einer Anordnung von mehreren Solarpaneelen, die bezogen auf die Einstrahlungsrichtung voneinander beabstandet hintereinander angeordnet sind, ist es von Vorteil, wenn die Schwenkachse des Reflektors benachbart zu einem der beiden zu der Schwenkachse parallel orientierten Ränder der reflektierenden Fläche verläuft, vorzugsweise mit dem einen der beiden Ränder zusammenfällt. Dies bedeutet, dass bei einem Reflektor mit einer rechteckigen oder trapezförmigen reflektierenden Fläche ein Verschwenken um einen der beiden zueinander parallel ausgerichteten Ränder erfolgt. Weist die reflektierende Fläche des Reflektors eine Trapezform auf, so liegt die Schwenkachse vorzugsweise nahe und parallel zu der kürzeren der beiden parallelen Ränder und fällt am bevorzugtesten mit dem kürzeren der beiden Ränder zusammen. Hierbei wird angemerkt, dass der Begriff Schwenkachse hier jeweils als virtuelle Achse verstanden wird, um die eine Schwenkbewegung des Reflektors ausgeführt wird. Diese kann ebenfalls zumindest teilweise körperlich ausgebildet sein, muss dies jedoch nicht.

Um zu erreichen, dass im Passivmodus kein auf den Reflektor auftreffendes Sonnenlicht auf die aktive Fläche des Solarpaneels reflektiert wird, wird bei einer bevorzugten Ausführungsform der Reflektor im Passivmodus so verschwenkt, dass eine Einfallsrichtung des Sonnenlichts in der Ebene des Reflektors bzw. der aktiven Fläche des Reflektors liegt.

Bei allen hier beschriebenen Ausführungsformen ist die aktive Fläche des Reflektors eben ausgebildet. Vorzugsweise ist die aktive reflektierende Fläche eine einstückige spiegelnde Fläche. Bei einigen Ausführungsformen ist es jedoch möglich, dass die reflektierende Fläche des Reflektors aus mehreren reflektierenden Teilen besteht, die möglichst nahtlos aneinander angefügt sind und entweder auf einem gemeinsamen Traggerüst angeordnet sind oder so ausgebildet sind, dass die nebeneinander angeordneten reflektierenden Elemente eine gemeinsame verschwenkbare Struktur bilden, die als Reflektor bezeichnet werden kann.

Die Unterstützungsvorrichtung ist bei einer Ausführungsform so ausgebildet, dass die Steuereinrichtung zusätzlich in den Passivmodus wechselt, wenn im Unterstützungsmodus aufgrund des Sonnenstands (bzw. einer Einstrahlungsrichtung des Sonnenlichts) ein Schattenwurf des Reflektors eine aktive Fläche eines weiteren Solarpaneels verschatten würde, welches beabstandet von dem Solarpaneel angeordnet ist. Dies bedeutet, dass die Steuereinrichtung der Unterstützungsvorrichtung bei einer Berechnung des optimalen Verschwenkungswinkels des Reflektors einen hierdurch entstehenden Schattenwurf sowie Daten berücksichtigt, die eine Anordnung des einzelnen Reflektors in einer Anlage zur Energiegewinnung umfassen. Bevorzugt ist die Steuereinrichtung so ausgebildet, dass eine bzw. die Berechnungseinheit mit einer Uhreinheit, die eine Zeiteingabe bereitstellt, sowie einem Speicher verknüpft ist, in dem astronomische Daten und Geometriedaten, die den Reflektor, das Solarpaneel, eine Anordnung des Reflektors relativ zu dem Solarpaneel und eine Ausrichtung des Solarpaneel sowie gegebenenfalls Angaben über weitere Solarpaneele abgespeichert sind, wobei die Berechnungseinheit ausgebildet ist, den Verschwenkungswinkel für den Reflektor zu errechnen und die zum Erstellen des errechneten Verschwenkungswinkels notwendigen Steuersignale für den Aktor zu erzeugen. Für die Errechnung werden astronomische Daten bzw. aus dem Stand der Technik bekannte Gleichungen zum Errechnen eines aktuellen Sonnenstands verwendet. Anhand der Geometrieangaben ist es dann möglich, jene Fläche zu ermitteln, in die durch den Reflektor einfallendes Sonnenlicht reflektiert wird. Lässt sich diese Fläche durch Variation des Verschwenkungswinkels so einstellen, dass die aktive Fläche des Solarpaneels vollflächig ausgeleuchtet wird, so wird der Verschwenkungswinkel unter dieser Maßgabe minimiert. Ist eine vollflächige Ausleuchtung der aktiven Fläche unter keinem Verschwenkungswinkel beim aktuellen Sonnenstand möglich, so wird in den Passivmodus gewechselt.

Bei einer Ausführungsform ist vorgesehen, dass ein minimaler Verschwenkungswinkel vorgegeben wird. Bei dieser Ausführungsform ist vorgesehen, dass in den Passivmodus gewechselt wird, wenn im Unterstützungsmodus ein Verschwenkungswinkel zwischen der aktiven Fläche des Solarpaneels und der reflektierenden Fläche des einen vorfestgelegten minimalen Verschwenkungswinkel unterschreitet bzw. unterschritte, um das Erfordernis der vollflächigen Ausleuchtung der aktiven Fläche zu gewährleisten. Das Vorsehen eines solchen minimalen Verschwenkungswinkels ist dann sinnvoll, wenn mehrere Paneele in einer Anlage zusammengefasst werden, die jeweils eine Unterstützungsvorrichtung aufweisen. Die Vorgabe des minimalen Verschwenkungswinkels wird so gewählt, dass durch die Unterstützungsvorrichtung, d.h. den Reflektor, keine Verschattung eines benachbarten Solarpaneels bzw. dessen aktiver Fläche erfolgt. Bei horizontal ausgerichteten rechteckförmigen Solarpaneelen, die parallel zur Schwenkachse des Reflektors eine größere Ausdehnung als quer zur Schwenkachse aufweisen, wird beispielsweise ein Abstand zwischen den Solarpaneelen gewählt, der eine Ausdehnung quer zur Schwenkachse der jeweiligen Reflektoren der Unterstützungsvorrichtung entspricht. In einem solchen Fall wird beispielsweise der minimale Verschwenkungswinkel auf 45° festgelegt.

Vorzugsweise ist die Berechnungseinheit der Steuereinrichtung mit einer Uhreinheit, die eine Zeitangabe bereitstellt, sowie einem Speicher verknüpft, in dem astronomische Daten und Geometriedaten, die den Reflektor, das Solarpaneel, eine Anordnung des Reflektors relativ zu dem Solarpaneel und eine Ausrichtung des Solarpaneels sowie gegebenenfalls Angaben über weitere Solarpaneele abgespeichert sind, wobei die Berechnungseinheit ausgebildet ist, den Verschwenkungswinkel für den Reflektor zu errechnen und die zum Einstellen des errechneten Verschwenkungswinkels notwendigen Steuersignale für den Aktor zu erzeugen. Die Steuereinheit ist somit in der Lage, anhand von astronomischen Daten, Geometriedaten und einer Zeitangabe, die sowohl eine Tageszeitangabe als auch eine Datumsangabe umfasst, den Sonnenstand, die sich hieraus ergebende Einstrahlungsrichtung des Sonnenlichts sowie die sich ergebenden Reflexionen an dem Reflektor zu errechnen und den Verschwenkungswinkel zu optimieren.

Bei einer weiteren Ausführungsform ist vorgesehen, dass benachbart zu der aktiven Fläche des Solarpaneels photosensitive Sensoren angeordnet sind, deren Messsignale die Steuereinheit auswertet, um über eine Regelschaltung die Verschwenkung des Reflektors zu steuern. Hierbei werden vorzugsweise ortsauflösende Photosensoren eingesetzt. Andernfalls ist es möglich, mehrere Sensoren zu verwenden, über die die aktuelle Lichtreflexion, d.h. eine Ausdehnung des aufgrund der Reflexion beleuchteten Gebiets messtechnisch zu ermitteln. Alternativ und/oder zusätzlich können auch photosensitive Sensoren beabstandet von dem Solarpaneel angeordnet sein, um beispielsweise eine Verschattung durch den Reflektor zu detektieren. Sind auch ein oder mehrere Sensoren im Verschattungsbereich durch den Reflektor angeordnet, so kann durch einen Vergleich der Messsignale des im Schattenbereichs liegenden Sensors und von Sensoren, die im durch die Reflektion beleuchteten Bereich liegen, erreicht werden, dass Schwankungen der Lichtintensität, die beispielsweise durch eine Bewölkung hervorgerufen werden, nicht als Änderungen des Sonnenstands gemessen werden.

Es versteht sich für den Fachmann, dass zur solaren Energiewandlung Anlagen errichtet werden können, die mehrere zueinander beabstandet angeordnete Solarpaneele umfassen, die jeweils eine Unterstützungsvorrichtung aufweisen. Hierbei können mehrere Reflektoren, sofern sie identisch ausgebildet und relativ zu identischen Solarpaneelen angeordnet sind, über ein und dieselbe Steuereinrichtung hinsichtlich der Verschwenkung durch Aktoren gesteuert werden. Bei einigen Ausführungsformen ist es möglich, nur einen Aktor vorzusehen, der mechanisch mit mehreren Reflektoren in einer Wirkbeziehung gekoppelt ist. Andere Ausführungsformen können vorsehen, dass jeder Reflektor mit einem eigenen Aktor wirkungstechnisch gekoppelt ist. Besonders bevorzugt umfasst eine solche Anlage in Ost-West-Richtung lang gestreckte Solarpaneele, die in Nord-Süd-Richtung voneinander beabstandet sind. Jeweils auf der Nordseite eines Solarpaneels ist eine Unterstützungsvorrichtung in Form eines Reflektors angeordnet. Insbesondere bei solchen Anlagen ist es wichtig, neben dem Kriterium, dass durch den Reflektor jeweils die gesamte aktive Fläche des Solarpaneels ausgeleuchtet wird, auch eine Verschattung der benachbarten Solarmodule bzw. die Vorgabe, diese nicht zu verschatten, bei der Errechnung des Verschwenkungswinkels und eines Wechsels von dem Unterstützungsmodus in den Passivmodus zu berücksichtigen ist.

Unter extremen Umweltbedingungen besteht eine erhöhte Gefahr für eine Beschädigung des Solarpaneels als auch der Unterstützungsvorrichtung, insbesondere des Reflektors. Daher ist bei einer bevorzugten Ausführungsform vorgesehen, dass die Steuereinrichtung abhängig von einem Umweltsignal abweichend in einen Schutzmodus wechselt, in dem der Verschwenkungswinkel α des Reflektors minimiert oder maximiert wird. Solche extremen Umweltsituationen stellen beispielsweise Starkwindwetterlagen dar. Zum einen treten in solchen Situationen starke Windlasten auf, sofern der Reflektor eine große Angriffsfläche darstellt. Zum anderen werden in solchen Situationen große Mengen an Staub, Blättern, Zweigen und Ästen oder anderen Gegenständen durch die Luft gewirbelt. Diese können sowohl zu einer Beschädigung des Solarpaneels als auch einer Schädigung der reflektierenden Fläche des Reflektors führen. Im Schutzmodus wird daher vorzugsweise der Verschwenkungswinkel minimiert, so dass der Reflektor die aktive Fläche des Solarpaneels überdeckt. In dieser Stellung ist ebenso die reflektierende Fläche, die dem Solarpaneel zugewandt ist, optimal gegen Umwelteinflüsse geschützt. Andere Umweltbedingungen, bei denen ein Wechsel in den Schutzmodus wünschenswert ist, stellen beispielsweise Hagel, Schneefall usw. dar.

Bei einer Weiterbildung der Erfindung ist vorgesehen, dass mit der Steuereinrichtung Umweltsensoren gekoppelt sind, die das Umweltsignal erzeugen. In einer einfachen Ausführungsform ist beispielsweise ein Windmesssensor vorgesehen, der eine Windgeschwindigkeit ermitteln kann. Wird eine Schwellenwindgeschwindigkeit überschritten, wird in den Schutzmodus gewechselt, bis eine andere Schwellengeschwindigkeit oder dieselbe Schwellenwindgeschwindigkeit wieder unterschritten sind. Vorzugsweise werden die beiden unterschiedlichen Schwellenwertgeschwindigkeiten verwendet, um ein hystereseartiges Verhalten zu erhalten, welches dazu führt, dass in Situationen, in denen die Windgeschwindigkeit im Bereich der einen Schwellengeschwindigkeit liegt, nicht ständig zwischen dem Unterstützungs- bzw. Passivmodus und dem Schutzmodus gewechselt wird. Andere Ausführungsformen können vorsehen, dass auch Sensoren zur Ermittlung der Windrichtung, Regensensoren oder Sensoren, die eine Art des Niederschlags bestimmen können, Photosensoren usw. verwendet werden. Alternativ und/oder zusätzlich kann eine Kommunikationsschnittstelle, beispielsweise eine Internetschnittstelle, mit der Steuereinrichtung gekoppelt sein, um die Möglichkeit zu eröffnen, dass der Schutzmodus gezielt durch ein Umweltsignal von einer zentralen Steuereinrichtung, die beispielsweise eine Wetterwarnstation sein kann, ausgelöst und/oder beendet werden kann. Das Umweltsignal kann auch manuell über ein mit dem Internet verknüpftes Terminal oder Ähnliches eingegeben werden.

Die Merkmale des erfindungsgemäßen Verfahrens und der erfindungsgemäßen Steuervorrichtung weisen dieselben Vorteile auf wie die entsprechenden Merkmale der erfindungsgemäßen Unterstützungsvorrichtung.

Nachfolgend wird die Erfindung unter Bezugnahme auf Ausführungsbeispiele näher erläutert. Hierbei zeigen:
- Fig. 1: eine schematische Darstellung einer aufgeständerten Photovoltaikanlage mit einem Paneel;
- Fig. 2: eine schematische Darstellung einer weiteren Photovoltaikanlage, die zwei zueinander beabstandete Solarpaneele umfasst;
- Fig. 3a, 3b: zwei schematische Schnittansichten zur Veranschaulichung eines Einflusses des Verschwenkungswinkels auf eine Verschattung durch den Reflektor der Unterstützungsvorrichtung; und
- Fig. 4a, 4b: schematische Darstellungen zur Erläuterung des Einflusses eines Azimutalwinkels auf eine Ausleuchtung eines Solarpaneels mit reflektiertem Sonnenlicht.

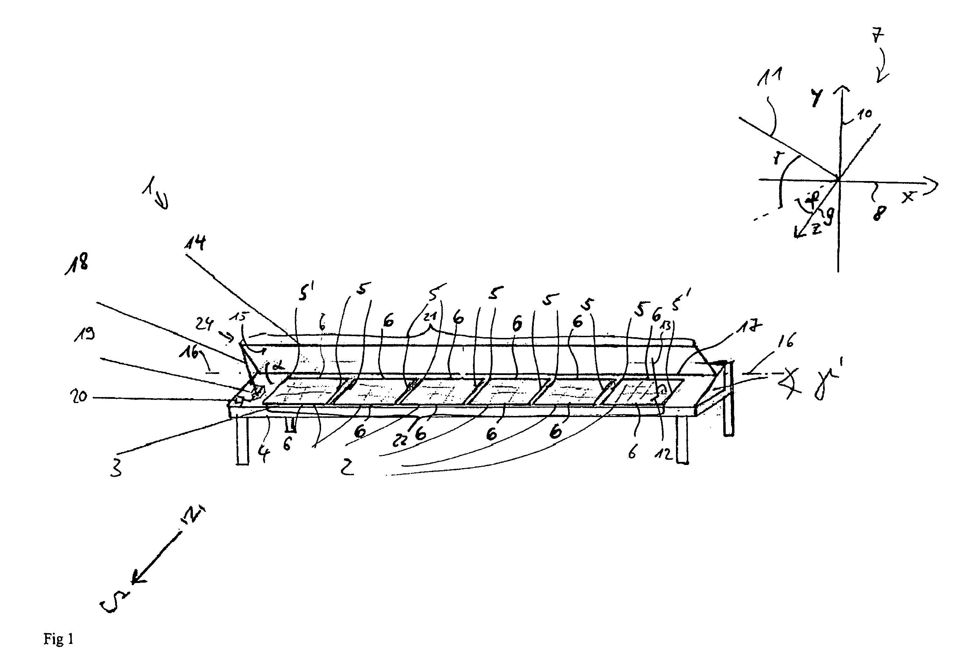

In Fig. 1 ist schematisch eine Photovoltaikanlage 1 dargestellt. Die Photovoltaikanlage 1 umfasst mehrere Photovoltaikmodule 2, die gemeinsam ein langgestrecktes Solarpaneel 3 bilden. Dieses ist auf einem Gerüst 4 aufgeständert. Eine aktive Fläche des Solarpaneels 3 ist durch die aktiven Flächen der Photovoltaikmodule 2 festgelegt. Die rechteckig ausgebildeten Photovoltaikmodule 2 stoßen entlang ihrer kurzen Seitenkanten 5 aneinander an. Lediglich die kurzen Seitenkanten 5' der in Reihe angeordneten äußeren Photovoltaikmodule 2 bilden die kurzen Seitenkanten der aktiven Fläche des Solarpaneels 3. Entsprechend bilden die Längsseitenkanten 6 der Photovoltaikmodule 2 gemeinsam die Längsseite der aktiven Fläche des Solarpaneels 3. Die einzelnen Photovoltaikmodule 2 sind eben ausgebildet. Alle Photovoltaikmodule 2 des Solarpaneels 3 sind in einer Ebene angeordnet, welche einen Neigungswinkel γ' gegenüber einer horizontal ausgerichteten xz-Ebene eines lokalen Horizontkoordinatensystems 7 aufweist. Das Horizontkoordinatensystem ist so ausgerichtet, dass eine x-Achse 8 in östlicher Richtung horizontal weist. Eine z-Achse weist horizontal in Richtung Süden. Eine y-Achse 10 weist auf einen Zenit, d.h. senkrecht nach oben. Ein Sonnenstand bzw. eine Einfallrichtung des Sonnenlichts 11 wird durch einen Höhenwinkel γ und einen Azimutalwinkel ϕ charakterisiert. Der Azimutalwinkel wird im mathematisch positiven Sinne ausgehend von der z-Achse in der xz-Ebene gemessen. Der Höhenwinkel γ gibt den Winkel zwischen der xz-Ebene und der Einfallsrichtung des Sonnenlichts an.

In der dargestellten Ausführungsform ist das Solarpaneel 3 nach Süden ausgerichtet. Dies bedeutet, dass die durch die Längsseitenkanten 6 der Photovoltaikmodule festgelegte Längskante des Solarpaneels 3 in Ost-West-Richtung ausgerichtet ist und eine Projektion 12 einer Oberflächennormale 13 der aktiven Fläche des Solarpaneels 3 in die xz-Ebene nach Süden weist, d.h. parallel zur z-Achse ausgerichtet ist.

Auf der Nordseite des Solarpaneels 3 ist ein Reflektor 14 angeordnet. Der Reflektor 14 weist eine dem Solarpaneel zugewandte reflektierende Fläche 15 auf. Der Reflektor 14 ist um eine Schwenkachse 16 schwenkbar. Die Schwenkachse 16 ist nahe einem Rand 17 der reflektierenden Fläche 15 parallel zu diesem Rand ausgerichtet. Vorzugsweise fällt der Rand 17 mit der Schwenkachse 16 zusammen. Der Reflektor 14 ist mit einer mechanischen Kopplung 18 mit einem Aktor 19 wirkungstechnisch verbunden. Bei der mechanischen Kopplung kann es sich um eine Stange handeln. Andere Ausführungsformen sehen einen Antriebsriemen oder eine Antriebskette vor, die auf einem Rad oder Zahnrad, welches starr mit dem Reflektor verbunden ist, umläuft. Der Aktor 19 ist so ausgestaltet, dass dieser über die mechanische Kopplung 18 den Reflektor 14 um die Schwenkachse 16 verschwenken kann. Ein zwischen der aktiven Fläche des Solarpaneels 3 und der ebenen reflektierenden Fläche 15 gemessener Verschwenkungswinkel α kann somit variiert werden. Eine Steuervorrichtung 20 ist ausgebildet, den Reflektor 14 abhängig von dem Sonnenstand bzw. der Einfallsrichtung des Sonnenlichts 11 so zu verschwenken, dass in einem Unterstützungsmodus die aktive Fläche des Solarpaneels, d.h. sämtliche aktive Flächen der Photovoltaikmodule 2, mit an der reflektierenden Fläche 15 reflektierten Sonnenlicht 11 vollflächig beleuchtet werden. Diese Beleuchtung findet zusätzlich zu der Beleuchtung mit direktem Sonnenlicht 11 statt. Hierdurch wird eine Konzentration des Sonnenlichts erreicht, so dass eine Energieumwandlung in den Photovoltaikmodulen eine höhere Effizienz als bei einer ausschließlichen Beleuchtung mit direktem Sonnenlicht erreicht wird.

Die Steuereinrichtung 20 umfasst hierfür eine Berechnungseinheit (nicht dargestellt), die anhand von astronomischen Daten und einer Zeitangabe, die von einer Uhreinheit (nicht dargestellt) bereitgestellt wird, den Sonnenstand bzw. Lichteinfallswinkel berechnet und anhand geometrischer Daten über die reflektierende Fläche, die aktive Fläche des Solarpaneels 3, eine Ausrichtung des Solarpaneels 3 im Horizontalkoordinatensystem 7, eine Anordnung und Ausrichtung des Reflektors 14 bzw. der reflektierenden Fläche 15 relativ zu der aktiven Fläche des Solarpaneels 3 und gegebenenfalls weiterer geometrischer Daten, die Fläche in Abhängigkeit des Verschwenkungswinkels α ermittelt, die durch das reflektierte Licht ausleuchtbar ist. Die geometrischen Daten über die Ausrichtung des Solarpaneels 3 im Horizontalkoordinatensystem 7 umfassen unter anderem den Neigungswinkel γ', der den Winkel zwischen der Ebene der aktiven Fläche des Solarpaneels 3 und der xz-Ebene des Horizontalkoordinatensystems 7 angibt. Eine Azimutalausrichtung ist durch einen Winkel zwischen der Projektion 12 der Oberflächennormale 13 der aktiven Fläche des Solarpaneels 3 in die xz-Ebene und der z-Achse 9 gegeben. Die Steuereinrichtung errechnet den Verschwenkungswinkel α, der dafür sorgt, dass die aktive Fläche des Solarpaneels vollflächig durch reflektiertes Sonnenlicht ausgeleuchtet wird. Hierbei wird der Verschwenkungswinkel α so optimiert, dass die durch das reflektierte Licht ausgeleuchtete Fläche möglichst minimal ist. Hierdurch wird eine optimale Konzentration erreicht. Ist jedoch eine vollflächige Ausleuchtung der aktiven Fläche des Solarpaneels 3 durch reflektiertes Sonnenlicht nicht möglich, so wird der Reflektor 14 so verschwenkt, dass gar kein reflektiertes Sonnenlicht auf die aktive Fläche des Solarpaneels 3 fällt und zugleich selbstverständlich auch keine Verschattung durch den Reflektor 14 herbeigeführt wird. Der Modus, in dem die aktive Fläche des Solarpaneels 3 vollflächig durch reflektiertes Sonnenlicht beleuchtet wird, wird als Unterstützungsmodus bezeichnet. Der Betriebsmodus, in dem der Reflektor 14 so verschwenkt wird, dass keine reflektierte Strahlung auf die aktive Fläche des Solarpaneels 3 auftrifft, wird Passivmodus genannt. Vorzugsweise wird der Reflektor 14 im Passivmodus so verschwenkt, dass die Einfallsrichtung des Sonnenlichts 11 in der Ebene der reflektierenden Fläche 15 des Reflektors 14 liegt. Bei dieser Ausrichtung findet weder eine Verschattung der aktiven Fläche noch eine Beleuchtung durch reflektiertes Sonnenlicht statt.

Um auch eine vollflächige Beleuchtung der aktiven Fläche des Solarpaneels bei Lichteinfallsrichtungen des Sonnenlichts 11 zu ermöglichen, die einen von 0° abweichenden Azimutalwinkel aufweisen, weist die reflektierende Fläche 15 des Reflektors 14 in einer Richtung parallel zur Schwenkachse 16 eine größere Ausdehnung 21 als eine Ausdehnung 22 der aktiven Fläche des Solarpaneels 3, die ebenfalls parallel zur Schwenkachse gemessen ist, auf.

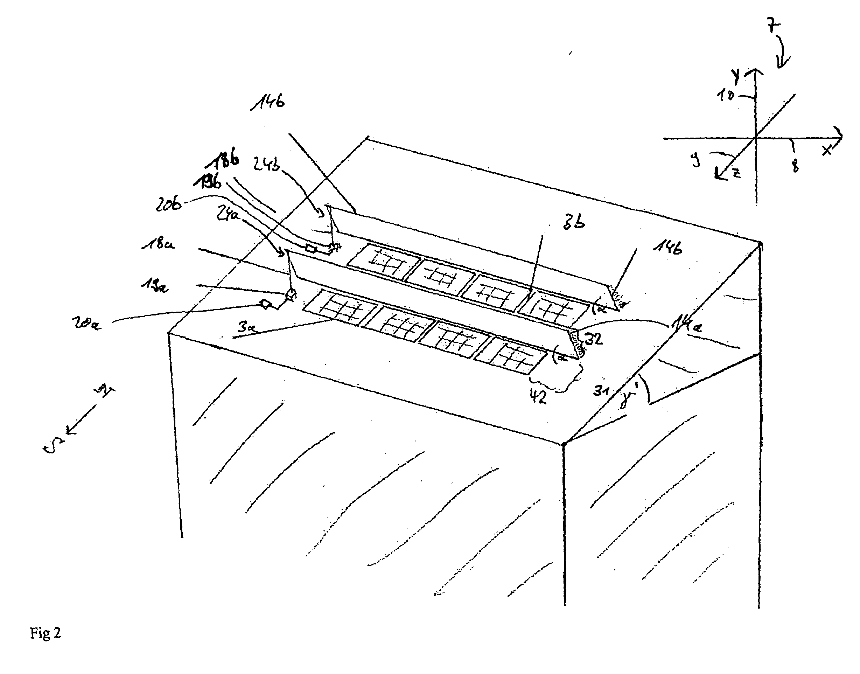

In Fig. 2 ist eine weitere Photovoltaikanlage ähnlich zu der nach Fig. 1 als Aufdachanlage dargestellt. Gleiche technische Merkmale sind mit identischen Bezugszeichen versehen. Bei der Ausführungsform nach Fig. 2 umfasst die Photovoltaikanlage 1 zwei zueinander beabstandete Solarpaneele 3a, 3b auf, die jeweils vier Photovoltaikmodule 2 umfassen, die in Reihe angeordnet sind. Jedem der Solarpaneele 3a, 3b ist eine Unterstützungsvorrichtung 24a, 24b zugeordnet, die einen Reflektor 14a, 14b, einen Aktor 19a, 19b mit einer mechanischen Kopplung 18a, 18b sowie eine Steuereinrichtung 20a, 20b aufweist. Bei anderen Ausführungsformen ist vorgesehen, dass die Aktoren 19a, 19b von einer gemeinsamen Steuereinrichtung angesteuert werden. Bei der dargestellten Ausführungsform ist zu erkennen, dass in Abhängigkeit von der Einstrahlungsrichtung des Sonnenlichts 11 und einem Verschwenkungswinkel αₐ des weiter südlich angeordneten Reflektors 14a eine Verschattung des nördlicher angeordneten Solarpaneels 3b möglich ist. Da eine solche Verschattung gerade vermieden werden soll, ist es vorteilhaft, zumindest für die südlicher angeordnete Unterstützungsvorrichtung 24a einen minimalen Verschwenkungswinkel αₘᵢₙ im Unterstützungsmodus vorzugeben, um eine Verschattung des nördlicher angeordneten Solarpaneels 3b im Unterstützungsmodus zu vermeiden. Sobald es zur Erfüllung des vollflächigen Ausleuchtungskriteriums des südlicher angeordneten Solarpaneels 3a notwendig wäre, den Verschwenkungswinkel αₐ kleiner als den vorgegebenen minimalen Verschwenkungswinkel αₘᵢₙ zu wählen, wird somit zumindest für die südlicher angeordnete Unterstützungsvorrichtung 24a der Unterstützungsmodus beendet und in den Passivmodus gewechselt. Es versteht sich für den Fachmann, dass im Passivmodus der minimale Verschwenkungswinkel αₘᵢₙ unterschritten werden darf.

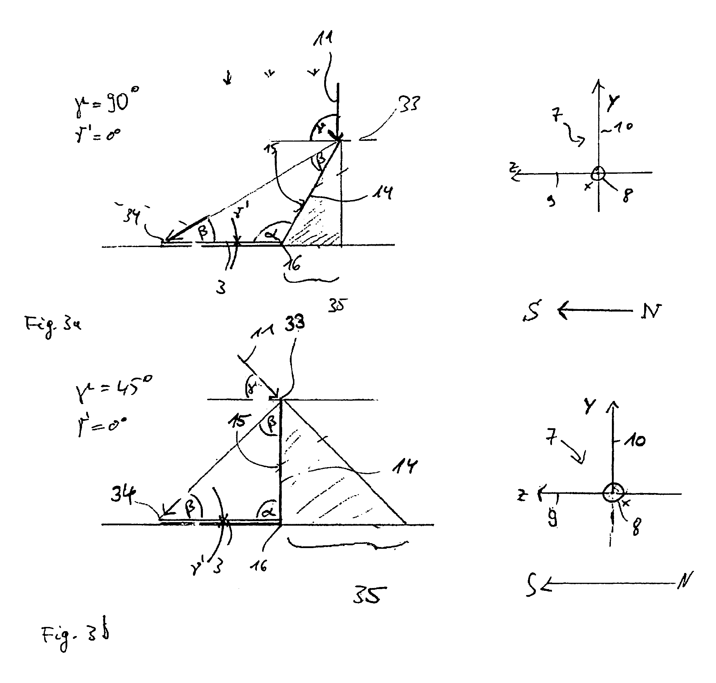

In Fig. 3a und 3b sind Ansichten von Osten auf eine Photovoltaikanlage 1 mit einer Unterstützungsvorrichtung schematisch dargestellt. Das Solarpaneel 3 ist jeweils horizontal ausgerichtet. Eine Schwenkachse, um die der Reflektor 14 relativ zu dem Solarpaneel 3 verschwenkbar ist, steht senkrecht auf der Zeichnungsebene und verläuft durch den Berührpunkt des Solarpaneels mit dem Reflektor. Es versteht sich für den Fachmann, dass bei einer technischen Umsetzung ein gewisser Abstand zwischen dem Reflektor und dem Solarpaneel notwendig sind, um eine Verschwenkung zu ermöglichen und thermische Ausdehnungen der einzelnen Bestandteile des Reflektors 14 und des Solarpaneels 3 zu ermöglichen, ohne eine Beschädigung herbeizuführen. In Fig. 3a trifft das Sonnenlicht senkrecht auf das Solarpaneel 3. Dies bedeutet, dass der Höhenwinkel γ 90° beträgt. In Fig. 3b ist die Situation dargestellt, in der das Sonnenlicht unter einem 45°-Winkel und einem Azimutalwinkel von 0° auf das Solarpaneel 3 auftrifft. Bei der dargestellten Ausführungsform ist eine Ausdehnung 31 des Solarpaneels senkrecht zur Schwenkachse gleich einer Ausdehnung 32 des Reflektors 14 senkrecht zur Schwenkrichtung. Hierbei wird davon ausgegangen, dass die aktive Fläche des Solarpaneels 3 sich über das gesamte Solarpaneel erstreckt und sich die reflektierende Fläche des Reflektors über die gesamte Fläche des Reflektors erstreckt. Für den Reflektor 14 ist jeweils der optimale Verschwenkungswinkel α eingestellt. Eingezeichnet ist der Strahlengang für Sonnenlicht 11, welches bei der Reflexion an der reflektierenden Fläche 14 des Reflektors 15 an dem von der Schwenkachse 16 beabstandeten Rand 33 der reflektierenden Fläche 15 auf den von der Schwenkachse abgewandten Rand 34 der aktiven Fläche des Solarpaneels 3 reflektiert wird. Würde der Verschwenkungswinkel α größer gewählt, so würde zwar eine vollflächige Ausleuchtung des Solarpaneels stattfinden, ein Teil des reflektierten Lichts würde jedoch neben der aktiven Fläche des Solarpaneels 3 auftreffen und somit keine Konzentratorwirkung entfalten. Wird hingegen der Verschwenkungswinkel α kleiner gewählt, so würde jeweils der Rand 34 der aktiven Fläche, welcher von der Verschwenkungsachse abgewandt ist, des Solarpaneels 3 nicht mit reflektiertem Licht beleuchtet. Von der Einfallsrichtung des Sonnenlichts 11 und dem Verschwenkungswinkel α sowie selbstverständlich der Ausdehnung 32 des Reflektors senkrecht zur Schwenkachse 16 ist eine in der Ebene des Solarpaneels erzeugte Schattenlänge 35 bzw. Schattenfläche abhängig. Je geringer der Höhenwinkel des einfallenden Lichts ist, desto größer ist die Schattenlänge 35 bzw. Schattenfläche, die der Reflektor 14 in der Ebene des Solarpaneels erzeugt. Diese Schattenlänge in der Ebene des Solarpaneels bzw. die Fläche ist ein Maß für die Konzentration, d.h. Intensitätssteigerung des Lichts durch die Unterstützungsvorrichtung. Je geringer der Höhenwinkel γ wird, desto größer wird die Schattenlänge 35. Daher wird bei Photovoltaikanlagen, die Solarpaneele umfassen, die aus in Reihen miteinander verbundenen Photovoltaikmodulen bestehen, ein minimaler Höhenwinkel festgelegt, für den keine Verschattung des benachbarten Solarpaneels durch den Reflektor der Unterstützungsvorrichtung eines südlicher angeordneten Solarpaneels erfolgen soll. Hiermit korrespondiert ein minimaler Verschwenkungswinkel αₘᵢₙ. Dieser minimale Verschwenkungswinkel αₘᵢₙ legt eine Grenzbedingung für einen Wechsel von dem Unterstützungsmodus in den Passivmodus fest. Sind die zueinander beabstandet angeordneten Solarpaneele 3, wie beispielsweise bei der Photovoltaikanlage 1 nach Fig. 2, alle in einer gemeinsamen Ebene angeordnet, so werden die Solarpaneele vorzugsweise so voneinander beabstandet, dass der Abstand gleich einer Ausdehnung senkrecht zu der Schwenkachse der Unterstützungsvorrichtung ist. Der Reflektor weist senkrecht zur Schwenkachse ebenfalls dieselbe Ausdehnung wie die Solarpaneele senkrecht zur Schwenkachse auf.

Es ergibt sich für den Fachmann, dass bei anderen Ausführungsformen ein Neigungswinkel γ' der Solarpaneele entsprechend zu berücksichtigen ist. Für eine Berechnung des Verschwenkungswinkels ist hauptsächlich ein Auftreffwinkel des Sonnenlichts auf die aktive Fläche von Bedeutung, der sich aus dem Höhenwinkel γ und dem Neigungswinkel γ' berechnen lässt.

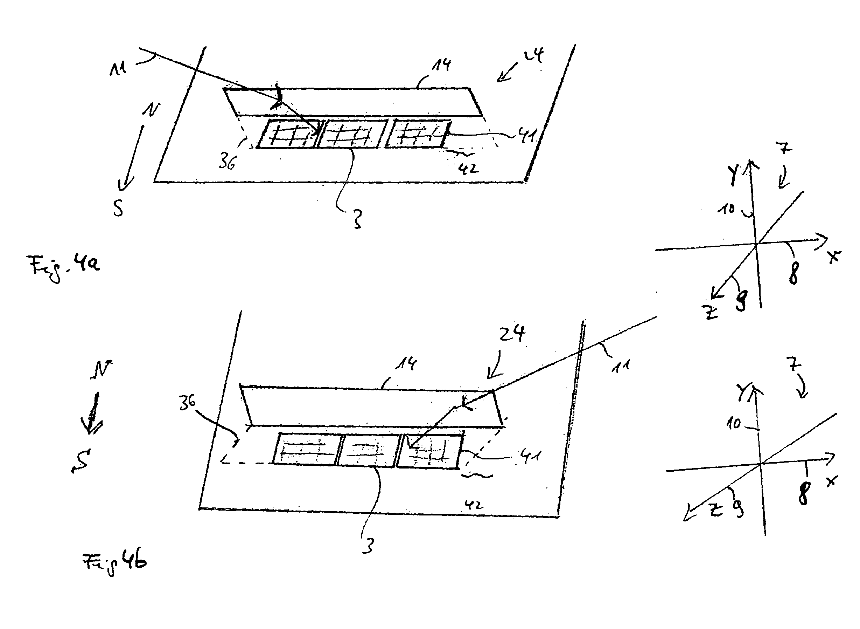

Da sich im Tagesverlauf nicht nur der Höhenwinkel γ für das Sonnenlicht ändert, sondern auch dessen Azimutalwinkel ϕ, ist es von Vorteil, eine Ausdehnung des Reflektors, d.h. der reflektierenden Fläche, entlang der Schwenkachse größer zu wählen als die Ausdehnung der aktiven Fläche des Solarpaneels parallel zur Schwenkachse ist. Dieses soll anhand von Fig. 4a und 4b verdeutlicht werden. Ist das Solarpaneel 3 mit einer rechteckigen aktiven Fläche nach Süden ausgerichtet, so ist die Unterstützungsvorrichtung 24 vorzugsweise so angeordnet, dass die Schwenkachse 16 in Ost-West-Richtung verläuft. Nur bei einem Azimutalwinkel von 0°, d.h. einem Sonnenlichteinfall aus Süden, wird durch einen rechtwinkligen Reflektor auch eine rechteckige Fläche in der Ebene der aktiven Fläche des Solarpaneels mit reflektierter Strahlung ausgeleuchtet. In diesem Fall steht die Azimutalrichtung, welches die Projektion der Richtung des einfallenden Lichts in die Horizontalebene ist, senkrecht auf der Schwenkachse. Weist die Azimutalrichtung einen hiervon abweichenden Winkel auf, so erzeugt eine rechteckige reflektierende Fläche des Reflektors 14 in der Ebene der aktiven Fläche des Solarpaneels 3 eine durch das reflektierte Licht ausgeleuchtete Fläche, die die Form eines Parallelogramms 36 aufweist. Um sicherzustellen, dass dieses Parallelogramm 36 die rechteckförmige aktive Fläche des Solarpaneels 3 vollständig überdeckt, ist es erforderlich, dass sich die reflektierende Fläche parallel zur Schwenkachse über den senkrecht zur Schwenkachse verlaufenden Rand 41 des Solarpaneels 3 hinaus erstreckt. Dies ist exemplarisch in Fig. 4a und 4b dargestellt. Ein Überstand 42 ist bei der dargestellten Ausführungsform so gewählt, dass er einer Länge des senkrecht zur Schwenkachse verlaufenden Rands 41 der aktiven Fläche des Solarpaneels 3 entspricht. Schematisch sind in den Fig. 4a und 4b Photovoltaikanlagen 1 dargestellt, bei denen das Sonnenlicht maximal aus westlicher Richtung (Fig. 4a) bzw. maximal aus östlicher Richtung (Fig. 4b) einfällt, bis zu der jeweils die Unterstützungsvorrichtung im Unterstützungsmodus betreibbar ist. Weicht der Azimutalwinkel um einen größeren Betrag von dem Wert 0 (Süden) ab, so wechselt die Unterstützungsvorrichtung in den Passivmodus, da eine vollflächige Ausleuchtung mit reflektiertem Sonnenlicht der aktiven Fläche für diesen Azimutalwinkel nicht möglich ist. D.h. der Azimutalwinkelbereich, für den eine vollflächige Ausleuchtung des aktiven Bereichs des Solarpaneels durch reflektiertes Sonnenlicht möglich ist, ist beschränkt und abhängig von einer Ausdehnung des Überstands 42 bzw. der Überstände sowie einer Form der reflektierenden Fläche sowie dem aktuellen Höhenwinkel γ des Sonnenlichts. Eine Ausdehnungsbegrenzung der reflektierenden Fläche parallel zur Schwenkachse führt somit zu einer Beschränkung des Azimutalwinkelbereichs, in dem die Unterstützungsvorrichtung im Unterstützungsmodus betrieben werden kann.

Die gezeigten Solarpaneele umfassen jeweils in einer Reihe angeordnete Photovoltaikmodule. Andere Ausführungsformen können Solarpaneele umfassen, bei denen mehrere Reihen Photovoltaikmodule zu einem Solarpaneel zusammengefasst sind, die durch einen Reflektor mit reflektiertem Sonnenlicht beleuchtet werden.

Es versteht sich für den Fachmann, dass mehrere unmittelbar aneinander grenzende Reflektoren, deren Schwenkachsen kollinear sind, als ein Reflektor aufgefasst werden können, wenn alle Reflektoren jeweils um denselben Verschwenkungswinkel α verschwenkt werden.

Bei den dargestellten Ausführungsformen ist es zusätzlich möglich, Umweltsensoren vorzusehen, die beispielsweise eine Windgeschwindigkeit, eine Windrichtung, eine Niederschlagsmenge, eine Niederschlagsart oder Ähnliches messen. Diese erzeugen ein oder mehrere Umweltsignale, die an die Steuereinrichtung übermittelt werden. Die Steuereinrichtung kann so weitergebildet sein, dass sie in Abhängigkeit von dem oder den Umweltsignalen abweichend in einen Schutzmodus wechselt. Wird beispielsweise eine Windgeschwindigkeit oberhalb einer ersten Schwellengeschwindigkeit ermittelt, so wird in einen Schutzmodus gewechselt, in dem der Verschwenkungswinkel minimiert oder maximiert wird. Vorzugsweise wird der Verschwenkungswinkel minimiert, so dass der Reflektor die aktive Fläche des Solarpaneels vorzugsweise vollflächig abdeckt. In dieser Stellung sind zum einen die aktive Fläche des Solarpaneels und zum anderen die reflektierende Fläche des Reflektors optimal vor Umwelteinflüssen geschützt. Die auftretenden Windlasten können hierdurch minimiert werden. Ebenso werden Beschädigungen des Solarpaneels als auch der reflektierenden Fläche des Reflektors, beispielsweise durch aufgewirbelten Staub oder Äste, vermieden. Andere Umweltsensoren, die beispielsweise einen Hagelaufschlag detektieren können, können alternativ oder zusätzlich verwendet werden und führen so zu einem Schutz vor Hagelschäden. Alternativ oder zusätzlich kann mit der Steuereinrichtung eine Kommunikationsschnittstelle verbunden sein, die in der Lage ist, ein Umweltsignal zu empfangen und an die Steuereinrichtung weiterzuleiten. Bei diesem Umweltsignal kann es sich beispielsweise um ein Signal handeln, welches über das Internet an die Steuereinrichtung übermittelt wird, um diese in den Schutzmodus wechseln zu lassen oder einen Wechsel aus dem Schutzmodus in den Unterstützungs- bzw. Passivmodus zu bewirken. Als Umweltsensoren können ebenso photosensitive Sensoren eingesetzt werden, so dass es möglich ist, dass die Unterstützungsvorrichtung bei Dunkelheit, insbesondere nachts, in den Schutzmodus wechselt. Bei der Kommunikationsschnittstelle kann es sich um jede beliebige Kommunikationsschnittstelle, beispielsweise eine drahtgebundene, aber auch eine drahtlose, beispielsweise Funkschnittstelle, handeln.

### Bezugszeichenliste

- 1: Photovoltaikanlage
- 2: Photovoltaikmodule
- 3, 3a, 3b: Solarpaneel
- 4: Gerüst
- 5: kurze Seitenkante
- 6: Längsseitenkante
- γ': Neigungswinkel
- 7: Horizontkoordinatensystem
- 8: x-Achse
- 9: z-Achse
- 10: y-Achse
- 11: Sonnenlicht
- γ: Höhenwinkel
- ϕ: Azimutalwinkel
- 12: Projektion
- 13: Oberflächennormale
- 14: Reflektor
- 15: reflektierende Fläche
- 16: Schwenkachse
- 17: Rand
- 18, 18a, 18b: mechanische Kopplung
- 19, 19a, 19b: Aktor
- α: Verschwenkungswinkel
- 20, 20a, 20b: Steuereinrichtung
- 21: Ausdehnung des Reflektors parallel zur Schwenkachse
- 22: Ausdehnung des Solarpaneels parallel zur Schwenkachse
- 24, 24a, 24b: Unterstützungsvorrichtung
- 31: Ausdehnung Solarpaneel senkrecht zur Schwenkachse
- 32: Ausdehnung Reflektor senkrecht zur Schwenkachse
- 33: von der Schwenkachse abgewandter Rand des Reflektors
- 34: von der Schwenkachse abgewandter Rand der aktiven Fläche des Solarpaneels
- 35: Schattenlänge
- 36: Parallelogramm
- 41: Rand senkrecht zur Schenkachse
- 42: Überstand

## Patentansprüche

1. Unterstützungsvorrichtung (24, 24a, 24b) für zur Energiegewinnung aus Sonnenlicht (11) ausgebildete Solarpaneele (3, 3a, 3b) umfassend:
einen Reflektor (14), der um eine Schwenkachse (16) schwenkbar gelagert ist,
einen mit dem Reflektor (14) gekoppelten Aktor (19, 19a, 19b) zum Verschwenken des Reflektors (14) um die Schwenkachse (16) und
eine Steuereinrichtung (20, 20a, 20b), die mit dem Aktor (19, 19a, 19b) gekoppelt ist und zum sonnenstandabhängigen Antreiben des Aktors (19, 19a, 19b) ausgebildet ist,
wobei der Reflektor (14) benachbart zu einem im direkten Sonnenlicht (11) angeordneten Solarpaneel (3, 3a, 3b) so anordenbar ist, dass bei geeigneter Verschwenkungsstellung direkt auf den Reflektor (14) auftreffendes Sonnenlicht (11) auf eine aktive Fläche des Solarpaneels (3, 3a, 3b) reflektierbar ist,
**dadurch gekennzeichnet, dass**
die Steuereinrichtung (20, 20a, 20b) ausgebildet ist, abhängig vom Sonnenstand den Aktor (19, 19a, 19b) so zu steuern, dass entweder in einem Unterstützungsmodus, sofern der Sonnenstand dieses ermöglicht,
das von dem Reflektor (14) auf die aktive Fläche des Solarpaneels (3, 3a, 3b) reflektierte Licht diese aktive Fläche des Solarpaneels (3, 3a, 3b) vollflächig überdeckt
oder andernfalls, sofern eine vollflächige Ausleuchtung der aktiven Fläche des Solarpaneels (3, 3a, 3b) nicht möglich ist,
in einem Passivmodus gar keine Sonnenlichtreflexion von dem Reflektor (14) auf die aktive Fläche des Solarpaneels (3, 3a, 3b) erfolgt.

2. Unterstützungsvorrichtung (24, 24a, 24b) nach Anspruch 1, **dadurch gekennzeichnet, dass** die Steuereinrichtung (20, 20a, 20b) ausgebildet ist, über den Aktor (19, 19a, 19b) den Reflektor (14) im Unterstützungsmodus so zu verschwenken, dass die durch das reflektierte Licht ausgeleuchtete Fläche in der Ebene des Solarpaneels (3, 3a, 3b) minimiert ist, unter der Randbedingung, dass die aktive Fläche des Solarpaneels (3, 3a, 3b) vollflächig ausgeleuchtet ist.

3. Unterstützungsvorrichtung (24, 24a, 24b) nach Anspruch 1 oder 2, **dadurch gekennzeichnet, dass** die Steuereinrichtung (20, 20a, 20b) ausgebildet ist, den Reflektor (14) im Passivmodus so zu verschenken, dass eine Einfallrichtung des Sonnenlichts (11) in der Ebene des Reflektors (14) liegt.

4. Unterstützungsvorrichtung (24, 24a, 24b) nach einem der vorangehenden Ansprüche, **dadurch gekennzeichnet, dass** die Steuereinrichtung (20a) ausgebildet ist, zusätzlich in den Passivmodus zu wechseln, wenn im Unterstützungsmodus aufgrund des Sonnenstands ein Schattenwurf des Reflektors (14) eine aktive Fläche eines weiteren Solarpaneel (3b) verschatten würde, welches beabstandet von Solarpaneel (3a) angeordnet ist.

5. Unterstützungsvorrichtung (24a) nach einem der vorangehenden Ansprüche, **dadurch gekennzeichnet, dass** die Steuereinrichtung (20a) eine Uhreinheit, die eine Zeitangabe bereitstellt, und eine Berechnungseinheit sowie einen mit der Berechnungseinheit verknüpften Speicher umfasst, in dem astronomische Daten und Geometriedaten, die den Reflektor (14a), das Solarpaneel (3a), eine Anordnung des Reflektors (14a) relativ zu dem Solarpaneel (3a) und eine Ausrichtung des Solarpaneels (3a) sowie gegebenenfalls Angaben über weitere Solarpaneele (3b) abgespeichert sind, anhand derer das Berechnungsmodul den Verschwenkungswinkel für den Reflektor (14a) errechnet und die zum Einstellen des errechneten Verschwenkungswinkels (α) notwendigen Steuersignale für den Aktor (19a) erzeugt.

6. Unterstützungsvorrichtung (24, 24a, 24b) nach einem der vorangehenden Ansprüche, **dadurch gekennzeichnet, dass** die Steuereinrichtung (20, 20a, 20b) ausgebildet ist, abhängig von einem Umweltsignal abweichend in einen Schutzmodus zu wechseln, in dem der Aktor (19, 19a, 19b) angesteuert wird, den Verschwenkungswinkel zu minimieren oder zu maximieren.

7. Verfahren zum Unterstützen einer Energiegewinnung aus Sonnenlicht (11) mit Hilfe von Solarpaneelen (3, 3a, 3b), umfassend die Schritte:
Bereitstellen eines um eine Schwenkachse (16) schwenkbaren Reflektors (14) benachbart zu einem Solarpaneel (3, 3a, 3b) und
Verschwenken des um eine Schwenkachse (16) schwenkbaren Reflektors (14) abhängig von einem Sonnenstand in eine Stellung bei der direkt auf den Reflektor (14) auftreffendes Sonnenlicht (11) auf eine aktive Fläche eines direktem Sonnenlicht (11) ausgesetzten Solarpaneels (3, 3a, 3b) reflektiert wird,
**dadurch gekennzeichnet, dass**
der Reflektor (14) abhängig von dem Sonnenstand so verschwenkt wird, dass entweder in einem Unterstützungsmodus, sofern der Sonnenstand dieses ermöglicht,
das von dem Reflektor (14) auf die aktive Fläche des Solarpaneels (3, 3a, 3b) reflektierte Licht diese aktive Fläche des Solarpaneels (3, 3a, 3b) vollflächig überdeckt
oder andernfalls, sofern eine vollflächige Ausleuchtung der aktiven Fläche des Solarpaneels (3, 3a, 3b) nicht möglich ist,
in einem Passivmodus gar kein Sonnenlicht von dem Reflektor (14) auf die aktive Fläche des Solarpaneels (3, 3a, 3b) reflektiert wird.

8. Verfahren nach Anspruch 7, **dadurch gekennzeichnet, dass** Reflektor (14) im Unterstützungsmodus so verschwenkt wird, dass die durch das reflektierte Licht ausgeleuchtete Fläche in der Ebene des Solarpaneels (3, 3a, 3b) minimiert wird, unter der Randbedingung das die aktive Fläche des Solarpaneels (3, 3a, 3b) vollflächig ausgeleuchtet ist.

9. Verfahren nach Anspruch 7 oder 8, **dadurch gekennzeichnet, dass** der Reflektor (14) im Passivmodus so verschenkt wird, dass eine Einfallrichtung des Sonnenlichts (11) in der Ebene des Reflektors (14) liegt.

10. Verfahren nach einem der Ansprüche 7 bis 9, **dadurch gekennzeichnet, dass** auch in den Passivmodus gewechselt wird, wenn im Unterstützungsmodus aufgrund des Sonnenstands ein Schattenwurf des Reflektors (14a) eine aktive Fläche eines weiteren Solarpaneel (3b) verschatten würde, welches beabstandet von Solarpaneel (3a) angeordnet ist.

11. Verfahren nach einem der Ansprüche 7 bis 10, **dadurch gekennzeichnet, dass** in Abhängigkeit von einem Umweltsignal abweichend in einen Schutzmodus gewechselt wird, in dem der Verschwenkungswinkel (α, αₐ, α_{b}) des Reflektors (14, 14a, 14b) minimiert oder maximiert wird, wobei das Umweltsignal über eine Kommunikationsschnittstelle empfangen wird.

12. Steuereinrichtung (20, 20a, 20b) für eine Unterstützungsvorrichtung (24, 24a, 24b) einer Anlage zur Energiegewinnung aus Sonnenlicht (11) mit Hilfe von Solarpaneelen (3, 3a, 3b), wobei die Unterstützungsvorrichtung (24, 24a, 24b) einen Reflektor (14), der um eine Schwenkachse (16) schwenkbar gelagert ist, einen mit dem Reflektor (14) gekoppelten Aktor (19, 19a, 19b) zum Verschwenken des Reflektors (14) um die Schwenkachse (16) umfasst, und
der Reflektor (14) benachbart zu einem im direkten Sonnenlicht (11) angeordneten Solarpaneel (3, 3a, 3b) so angeordnet ist, dass bei geeigneter Verschwenkungsstellung direkt auf den Reflektor (14) auftreffendes Sonnenlicht (11) auf eine aktive Fläche des Solarpaneels (3, 3a, 3b) reflektierbar ist,
wobei die Steuereinrichtung (20, 20a, 20b)
eine Berechnungseinheit umfasst, die Steuersignale für den Aktor (19, 19a, 19b) erzeugt, um sonnenstandabhängig die Verschwenkung des Reflektors (14) zu steuern,
**dadurch gekennzeichnet, dass**
die Berechnungseinheit ausgebildet ist, abhängig vom Sonnenstand die Steuersignale für den Aktor (19, 19a, 19b) so zu erzeugen, dass der Aktor (19, 19a, 19b) den Reflektor (14) so verschwenkt, dass entweder in einem Unterstützungsmodus, sofern der Sonnenstand dieses ermöglicht,
das von dem Reflektor (14) auf die aktive Fläche des Solarpaneels (3, 3a, 3b) reflektierte Licht diese aktive Fläche des Solarpaneels (3, 3a, 3b) vollflächig überdeckt
oder andernfalls, sofern eine vollflächige Ausleuchtung der aktiven Fläche des Solarpaneels (3, 3a, 3b) nicht möglich ist,
in einem Passivmodus gar keine Sonnenlichtreflexion von dem Reflektor (14) auf die aktive Fläche des Solarpaneels (3, 3a, 3b) erfolgt.

13. Steuereinrichtung (20, 20a, 20b) nach Anspruch 12, **dadurch gekennzeichnet, dass** die Berechnungseinheit ausgebildet ist, die Steuersignale für Aktor (19, 19a, 19b) so zu erzeugen, dass über den Aktor (19, 19a, 19b) der Reflektor (14) im Unterstützungsmodus so verschwenkt wird, dass die durch das reflektierte Licht ausgeleuchtete Fläche in der Ebene des Solarpaneels (3, 3a, 3b) minimiert ist, unter der Randbedingung das die aktive Fläche des Solarpaneels (3, 3a, 3b) vollflächig ausgeleuchtet ist.

14. Steuereinrichtung (20, 20a, 20b) nach Anspruch 12 oder 13, **dadurch gekennzeichnet, dass** die Berechnungseinheit ausgebildet ist, die Steuersignale für Aktor (19, 19a, 19b) so zu erzeugen, dass der Reflektor (14) im Passivmodus so verschenkt wird, dass eine Einfallrichtung des Sonnenlichts (11) in der Ebene des Reflektors (14) liegt.

15. Steuereinrichtung (20a) nach einem der Ansprüche 12 bis 14, **dadurch gekennzeichnet, dass** die Berechnungseinheit ausgebildet ist, auch in den Passivmodus zu wechseln, wenn im Unterstützungsmodus aufgrund des Sonnenstands ein Schattenwurf des Reflektors (14a) eine aktive Fläche eines weiteren Solarpaneel (3b) verschatten würde, welches beabstandet von Solarpaneel (3a) angeordnet ist.
